# EUROPEAN PATENT SPECIFICATION

(11) **EP 4 001 116 B1**
(45) Date of publication and mention of the grant of the patent: **25.03.2026**
(21) Application number: 20382999.9
(22) Date of filing: 18.11.2020
(51) Int. Cl.: B64D 13/06, F02C 6/08

(54) **AIR MANAGEMENT SYSTEM**
LUFTVERSORGUNGSSYSTEM
SYSTÈME DE GESTION D'AIR

(43) Date of publication of application: 25.05.2022
(73) Proprietor: Airbus Operations, S.L.U., 28906 Getafe (Madrid) (ES)
(72) Inventor: PRIETO PADILLA, Juan Tomás, E-28906 Getafe, Madrid (ES); BAYONA REVILLA, Lucía, E-28906 Getafe, Madrid (ES); BARRON VEGA, Diego, E-28906 Getafe, Madrid (ES)
(74) Representative: ABG Intellectual Property Law, S.L.

(56) References cited:
- US-A- 4 263 786
- US-A1- 2015 251 765
- US-A1- 2018 312 262
- US-A1- 2019 153 963

## Description

### TECHNICAL FIELD OF THE INVENTION

The present invention belongs to the field of pneumatic air distribution systems, and particularly, it relates to the provision of different bleed air sources for supplying pressurized air to air consumer equipment.

In particular, either air taken from the first-intermediate compressor stages of a gas turbine engine, or air taken from last compressor stages, or even a mixture thereof may perform such supplying of compressed air depending on an aircraft operation condition, for instance the flight altitude.

Therefore the air management system of the present invention takes into account flight parameters in order to selectively feed air consumer equipment via any of the above compressed air sources thus avoiding the oversizing of nowadays air management system and consequently minimizing energy loss when operating off-design.

### BACKGROUND OF THE INVENTION

In gas turbine engines, air is normally taken from compressor stages upstream of the fuel-burning chamber(s). Thus, this bleed air is at high temperature and high pressure, wherein typical values are comprised in the range 150-500°C when extracted from the engine, and in the range 150-250°C after regulation in a pre-cooler; and 40 psig (0,27579 MPa) relative pressure, respectively.

Once taken, this bleed air is channeled from said compressor stages of the engine to various locations within the aircraft by an air management system comprising in turn a network of ducts, valves and regulators. Consequently, such channeling means are to be adapted to withstand the high temperature and pressure of the bleed air.

Because of its high temperature and pressure, this bleeding air is used to operate air consumer equipment such as the Air Cycle Machines of the Environmental Control System (ECS), the Wing Anti-Ice system (WAIS) and other minor air consumers. Depending on the air consumer requirements to be fed, a wide range of pressure and temperature may be needed which entails different energy cost, for instance:
- air conditioning (i.e. ECS) is driven by the available pressure, and
- WAIS is driven by available temperature.

Classic architectures of air bleed system extract bleed air from the gas turbine compressor at two different stages via respective ports. One of these ports is located at a low-intermediate compressor stage (the so-called Intermediate Port, 'IP') while the second port is located at an intermediate-high compressor stage (the so-called High Port, 'HP') to allow extracting the bleed air at two different conditions.

Typical values of bleed air extracted from each of these ports are:
- Intermediate Port, 'IP': pressure from 10 psig (0,06895 MPa) ('idling') to 180 psig (1,2411 MPa) (maximum take-off thrust, 'MTO'), while temperature is between 80C° and 400°C.
- High Port, 'HP': pressure from 30 psig (0,20684 MPa) ('idling') to 650 psig (4,48159 MPa) ('MTO'), while temperature is between 150°C and 650°C.

It is to be noted that the exact value of pressure and temperature of the air bled depends on the engine speed. Similarly, although only two conventional ports have been discussed herein (IP and HP), the High Pressure Port, 'HP', may be formed by more than one port (normally two ports) all located at intermediate-high compressor stages, different from the Intermediate Pressure Port, 'IP'. Hereinafter, for illustrative purposes the possible ports (one or more) forming part of the High Pressure Port will be discussed in conjunction as 'HP'.

Under some circumstances, the channeling means may undergo an unexpected loss of bleed air, the *so-called* leakages, which could potentially lead to problems when operating the aircraft. Due to its inherent effect in the overall performance, detection means should be installed along the entire route of the channels. Eutectic salt-based sensors are widespread used in the industry as overheat detection sensors for sensing bleed air leakages throughout the ducting.

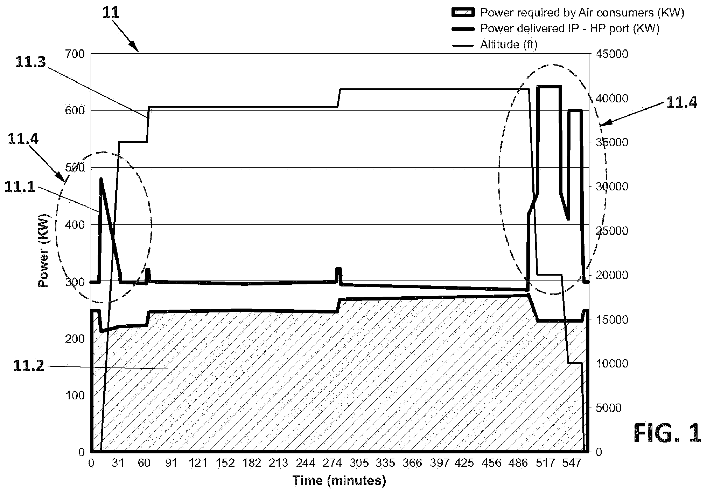

Furthermore, from *on-ground* to *in-flight,* external air conditions drastically change. This needs to be compensated by the onboard air management system by regulating the air bleeding from each of the two ports (IP and HP ports). Hence, the overall air management system relies on continuously bleeding air from the two ports at the same time and, accordingly, must be sized to operate at any planned flight phase, involving a significant energy loss during take-off/climb and descent/holding phases. Hereinafter, details of this energy loss can be seen in figure 1.

With the advent of new aircraft models (specifically those Ultra-High By-Pass Ratio engines that provide higher HP port temperatures with lower 'Fan port' pressures), the above problems stress. Consequently, there is a need in the aerospace industry for an air management system that satisfies air consumers requirements with the optimum energy extracted from the gas turbine engines. Document US 2018/0312262 A1 discloses a high efficiency pneumatic flow control system for aircraft.

Document US 2015/0251765 A1 discloses an apparatus and methods by which an ECS may be operated with low pressure bleed air so that fuel burn is minimized during flight of an aircraft.

### SUMMARY OF THE INVENTION

The present invention provides a solution for the aforementioned problems, by an air management system according to claim 1, a method for supplying pressurized air according to claim 8, and an aircraft according to claim 9. In dependent claims, preferred embodiments of the invention are defined.

As it was briefly discussed, an air bleed system comprises a network of ducts and valves configured to convey compressed air from particular locations within the engine compressor (i.e. at particular compressor stages) for different uses. The temperature and pressure of the air is thus variable dependent upon the compressor stage at which air is extracted (i.e. air is bled).

In particular, the air bleed system according to the invention comprises at least two ports, each being configured to extract air from a respective compressor stage where they are located. Particularly, one of this ports is located at a low-intermediate compressor stage of the gas turbine engine (so-called Intermediate Port, 'IP') while the other port is located at an intermediate-high compressor stage of the gas turbine engine (the so-called High Port, 'HP').

As mentioned, the High Pressure Port, 'HP', may be formed by more than one port, typically two ports, all located at different intermediate-high compressor stages, different from the Intermediate Pressure Port, 'IP'. Thus, in a particular embodiment, the gas turbine engine comprises a plurality of high-pressure ports all located at different high-intermediate compressor stages of the gas turbine engine whose air is jointly conveyed by the high-pressure bleed duct toward the inlet port of the mixing chamber.

As known, regardless the flight altitude or the flight phase of the aircraft, air bled from HP comprises higher pressure and temperature than IP air. In this regard, it is considered that the terms 'low' and 'high' used in this specification do not refer to relative terms rather the skilled person can easily identify and distinguish these two ports in a conventional compressor.

Further, in operation, that is, the aircraft being either on-ground or in-flight, air with a particular pressure, density and temperature surrounds the aircraft ('ambient air'). This mainly depends on the flight altitude or even the flight phase, where air with different properties enters the gas turbine engine and is furthermore affected by the compressor compression.

Thus, for a given gas turbine engine, air properties at each compressor stage may be predicted using compressor map, for instance, both at design and off-design conditions.

It is to be noted that said aircraft operation condition can be easily determined by the aircraft itself according to different sensors and electronics installed thereon, being the 'ambient air' different for each flight scenario. Then, the aircraft electronics sends such aircraft operation condition to the control unit which processes it and determine which compressed air source (IP, HP, or both) need to be used based on current aircraft operation.

To this end, based on the aircraft operation condition ('input') received, the control unit determines the more suitable bleed air source for supplying the consumers and re-configures the operation of the air management system via at least the first and second shut-off valves.

By controlling the opening / closing of these first and second shut-off valves, the inlet of the mixing chamber can be supplied exclusively with high-pressure air (coming from HP), low-pressure air (from IP), or both at the same time. Thus, in a particular embodiment, the mixing chamber is designed for minimizing pressure drops in any of the three situations.

According to the invention, the inlet port of the mixing chamber communicates with the low-pressure bleed duct and with the high-pressure bleed duct and, thus, is configured to received either low-pressure air, high-pressure air, or both at the same time. As known, the injection of high-pressure fluid in a low-pressure fluid produces a Venturi effect that causes suction and ejects the possible mixture (when air from the two ports is received in the mixing chamber). In other words, it is formed an air-mixing pump or jet pump.

Conventional air management systems relied on regulated mixed air extracted from the two ports at the same time, i.e. IP and HP, to meet the particular requirements of the air consumers. Unlike this, the present invention provides a solution that elects the more suitable source depending on the ambient air (flight phase / altitude) and, accordingly, engine speed.

High energy-demand flight phases of the aircraft encompasses on-ground operation (e.g. taxiing), take-off, or even the first portion of climbing, as well as other phases like descent or approaching. Therefore, in these energy-demanding flight phases, which represents a little portion of the overall flight, bleed air exclusively comes from the HP since the pressure delivered by the IP port is rendered not sufficient so as to meet by its own the pressure requirements from the air consumers. Thus, contrary to conventional architecture where IP port (little) was still used together with HP port (most), according to the present invention the first shut-off valve stops the flow of low-pressure air downstream and it is not used at all for pressure-related purposes.

Likewise, as the air was conventionally bled from IP in all flight phases, including those where the engine is at maximum power such as take-off, the engine needed to be sized for more power and, therefore, were larger. According to the present invention, as IP port no longer supplies at these high power situations, the air management system can be sized properly giving rise to less fuel consumption.

That is, the present air management system advantageously affects the overall aircraft performance in that there is a fuel burn benefit.

In a preferred embodiment, the air management system architecture is sized according to cruise phase flight conditions. That is, at least the low-pressure bleed duct, the high-pressure bleed duct, their respective shut-off valves, and the mixing chamber are sized according to cruise phase flight conditions.

In a particular embodiment, at the inlet port of the mixing chamber, the high-pressure bleed duct comprises a variable nozzle whose position determines the exit area for the high-pressure air toward said mixing chamber, and wherein the control unit is further configured to control the exit area of the variable nozzle based on the received input.

Examples of such a variable nozzle at the inlet of the mixing chamber can be found, for instance, in document US 2010/170574 A1.

Thus, in a preferred embodiment, the air management system according to the present invention comprises an air-mixing pump with variable injection section according to any of the embodiments described therein. Therefore, at least the variable nozzle and the mixing chamber form part of this air-mixing pump with variable injection section.

Without prejudice of the latter, the skilled person shall recognize other forms to implement such a variable nozzle at the outlet of the high-pressure duct to regulate the amount of high-pressure air entering the mixing chamber.

Thanks to this variable nozzle, the amount of air bled from the HP port can be finely regulated for meeting the actual demands of the consumers taking into account the flight phase and, thus, the engine speed.

For instance, at the 'holding' flight phase where the engine is idling, the **IP** port itself is not capable to extract the bleed air with sufficient pressure, so if energy-demand further increases, it would be necessary to raise the idle which in turn shall entails fuel consumption. On the contrary, according to the invention, the controlled assistance by the HP port according e.g., to actual needs, indeed relieves said IP port bleeding and permits to properly size the related hydraulics. In other words, HP port bleeds as much air as it is necessary for offsetting any energy peak demanded by the air consumers without substantial power loss.

Accordingly, the conventional HP ducting adapted for continuously supplying high-pressure air can be replaced by the new high-pressure bleed duct which only extends from HP port to the mixing chamber inlet in order to convey at certain flight phases (not all of them) said bleed air.

As mentioned, replacement of the conventional, larger and longer, HP ducting further entails the avoidance of the related fail-safe equipment such as sensors, valves (e.g. High Pressure Valve, 'HPV', or Over Pressure Valve, 'OVP'), etc. since the remaining outlet duct no longer conveys such a former high-pressure and high-temperature air.

Additionally, since in cruise (i.e., the design point) the consumers can be now fed exclusively by low-pressure air, IP port may be slightly moved forwards or backwards to further optimize the air management system operation for the majority of the flight (cruise). The bleed air extracted therein suffices to meet the air consumer requirements during long-term flight phases such as cruise.

In addition, the air management system according to this embodiment advantageously affects to the overall aircraft performance in that there is a fuel burn benefit of around 1% Thrust-specific fuel consumption, 'SFC', benefit in a typical short-range aircraft 800 nm (nautical miles) (1482 Km) mission profile. This fuel saving is achieved thanks to a substantial weight reduction due to conventional HP ducting replacement, and OPV and HPV deletion and, as will be described hereinafter, around 50% pre-cooler size reduction.

Further, this embodiment may allow for the complete deletion of the APU bleed ducting with the associated OHDS.

In an alternative embodiment, at the inlet port of the mixing chamber, the high-pressure bleed duct comprises a fixed nozzle for the high-pressure air toward said mixing chamber. That is, in this embodiment, the mixing chamber comprises a fixed geometry i.e. fixed exit area, for allowing the passage of high-pressure air toward the mixing chamber.

Likewise, at the inlet port of the mixing chamber, the low-pressure bleed duct also comprises a fixed geometry nozzle. Thus, the mixing chamber is optimized for mixing high-pressure with low-pressure air minimizing pressure drops.

Therefore, for those situations where consumers are exclusively fed by high-pressure air, the air management system further comprises a branch duct in fluid communication with the high-pressure bleed duct upstream the second shut-off valve and the outlet duct. This branch duct can be assimilated to the conventional HP ducting.

Therefore, said branch duct comprises a high pressure valve ('HPV') configured to maintain the high-pressure air conveyed within predetermined, admissible, pressure and temperature levels.

In an embodiment of the air management system, at the inlet port of the mixing chamber, the high-pressure bleed duct comprises a fixed nozzle for the high-pressure air toward said mixing chamber,
the air management system further comprises a branch duct in fluid communication with the high-pressure bleed duct upstream the second shut-off valve and the outlet duct, and
said branch duct comprises a high pressure valve configured to maintain the high-pressure air conveyed within predetermined pressure and temperature levels.

In a particular embodiment, the at least one air consumer is at least one of the following:
- environmental control system;
- fuel tank inerting system;
- wing anti-ice system;
- engine starting system;
- water and waste; and/or
- hydraulic reservoirs pressurization.

In a particular embodiment, the environmental control system comprises a vapor cycle machine in fluid communication with the outlet duct.

Advantageously, vapor cycle machine pack(s) require lower pressure to operate, which better fits with the pressure now delivered by the HP port through the variable nozzle.

Furthermore, along with the reduction of IP port by 1, 2 or 3 stages in comparison with conventional IP ports, lower pressure requirement of Vapor Cycle Machine packs during cruise conditions allows further improving 'SFC' benefit above 1% in a typical short-range aircraft.

Similarly, other designs adequate to operate at lower pressure may be envisaged within the present invention.

In a particular embodiment, the air management system further comprises a pre-cooler in thermal communication with the outlet duct and a cooling air source.

The pre-cooler is a heat exchanger typically arranged on the pylon close to the gas turbine engine and provides thermal contact between a duct coming from HP/IP ports, and cooling air coming either coming from a fan port or directly ram air.

As it was already explained hereinbefore, with the advent of Ultra-High By-Pass Ratio engines (that provide higher HP port temperatures and lower fan port pressure), pre-cooler integration in the pylon is becoming challenging due to both the high temperature handled and the lower fan port pressure which drive a significant size increase.

Advantageously, with the present invention, there is almost a 50% pre-cooler size reduction because of less temperature handled in output ducts and, thus, this eases pre-cooler integration.

In a particular embodiment, the pre-cooler is dimensioned to operate with the air coming from the mixing chamber.

In other words, to meet the air consumer requirements with the new air management system architecture, the pre-cooler is sized in holding flight phase, preferably when providing air to both the ECS and WAIS.

Holding phase is well-known as a maneuver designed to delay an aircraft already in flight being kept within a specified airspace at a particular altitude. Therefore, since this phase is the most energy-demanding part of the flight, since altitude is not high enough and speed is relatively low, it is usually taken as a design point for the Environmental Control System.

In a particular embodiment, the variable nozzle of the high-pressure bleed duct is configured to control the exit area for adapting the supply of high-pressure air according to the flight phase and/or altitude.

Therefore, the amount of high-pressure air delivered is adapted to the pressure required by the air consumer(s).

The aircraft operation condition is a pre-determined flight altitude and/or the flight phase among the following: taxiing, take-off, climb, cruise, descent, holding, and landing.

In a preferred embodiment, the control unit is configured to operate the first and second shut-off valves so that consumer(s) are fed exclusively with high-pressure air below a pre-determined flight altitude (for instance, 15000 ft (4572 m) and exclusively with low-pressure air above such pre-determined flight altitude.

The control unit is configured to selectively operate at least the first shut-off valve and/or the second shut-off valve according to the received input, so that:
- in taxiing, the first shut-off valve is closed while the second shut-off valve is opened allowing the flow of high-pressure air toward at least one air consumer;
- in taking-off, the first shut-off valve is closed while the second shut-off valve is opened allowing the flow of high-pressure toward at least one air consumer;
- in climbing, the first shut-off valve is closed while the second shut-off valve is opened up to a pre-determined flight altitude, being the pre-determined altitude preferably 15000 ft (4572 m); then, the first shut-off valve is switched to open while the second shut-off valve is switch to close allowing the flow of low-pressure air toward at least one air consumer;
- in cruise, the first shut-off valve is opened while the second shut-off valve is closed allowing the flow of low-pressure air toward at least one air consumer;
- in descending and landing, the first shut-off valve is closed while the second shut-off valve is opened allowing the flow of high-pressure air toward at least one air consumer; and
- in holding, either:
   o the first shut-off valve and the second shut-off valve are opened allowing the flow of mixed air toward at least one air consumer, or
   o the first shut-off valve is opened while the second shut-off valve is closed allowing the flow of low-pressure air toward at least one air consumer.

In other words, the air management system takes benefit of:
- the efficiency of the gas turbine engine in its design point, i.e. during cruise (or above a certain flight altitude or flight level) to provide pressurized air from IP port with minimum energy loss, and
- the immediate power of the high-pressure air from HP port modulated by the variable nozzle during on-ground, early climbing and descent which permit to adapt the high-pressure air delivered by the compressor to the pressure required by the consumers.

In a non-claimed example, in cruise, the control unit is further configured to open both the first shut-off valve and the second shut-off valve allowing the flow of mixed air toward at least one air consumer.

That is, in a corner or failure situation, the control unit may open both shut-off valves in cruise in order the HP port assist the IP port for supplying the consumers.

Nevertheless, for safety reasons, the aircraft could not potentially dispatch with a variable nozzle failed in a configuration when a bleed system is off, that is, that the bleeding system of an engine has failed.

In a second inventive aspect, the invention provides a method for supplying pressurized air to air consumer, as claimed in appended claim 8.

In a third inventive aspect, the invention provides an aircraft comprising an air management system according to claim 9.

All the features described in this specification (including the claims, description and drawings) and/or all the steps of the described method can be combined in any combination, with the exception of combinations of such mutually exclusive features and/or steps, with the true scope of the invention only being defined by the wording of the appended claims.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
Figure 1 This figure shows a schematic graph of a conventional IP, HP air power delivering in comparison with power required by air consumers.
Figure 2 This figure shows a schematic representation of an aircraft comprising an air management system according to the present invention.
Figures 3a-c These figures show a schematic architecture of (a) a conventional air management system, and embodiments of the air management system according to the present invention with (b) a fixed nozzle and (c) a variable nozzle.
Figure 4 This figure shows a schematic graph of the power delivering of the air management system of figure 3c in comparison with power required by air consumers.
Figures 5a-b These figures show schematic representations of an aircraft mission profile using an air management system according to the present invention throughout the flight phases, (a) in nominal case and (b) in failure scenario.

### DETAILED DESCRIPTION OF THE INVENTION

As it will be appreciated by one skilled in the art, aspects of the present invention may be embodied as an air management system (1), a method, or as an aircraft (10).

Figure 1 depicts a schematic graph (11) of a conventional IP - HP air bleed system (20) power delivering (11.1) in comparison with power required (11.2) by air consumers (2) throughout a complete flight.

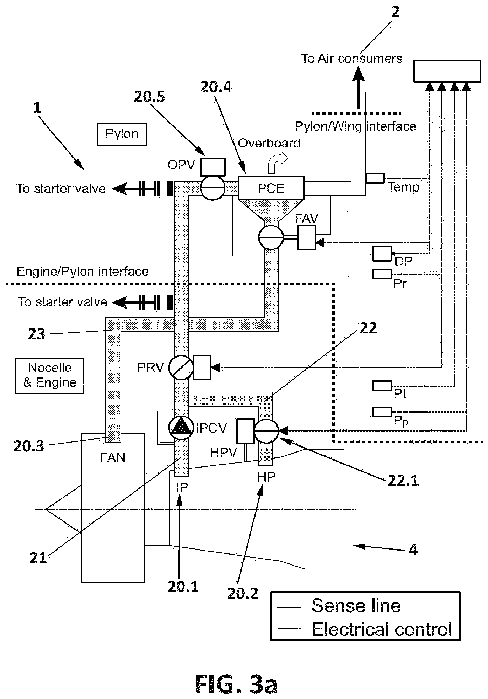

As it can be seen, it is compared the power required (11.2) by air consumers in kW vs. the power delivered (11.1) by a conventional IP - HP air bleed system (in kW) such as the one shown in Figure 3a. Superimposed to the former, there is an overview of the flight phases (11.3) through which aircraft (10) passes in a complete flight, in particular taking altitude as a reference to place the aircraft in each of such flight phases.

Left-ordinate axis of the graph indicates power (in kW), while right-ordinate axis indicates flight altitude (in ft.). Finally, abscissa axis refers to flight time (in minutes).

In this exemplary mission profile, there is a mismatch between power supplied by the air bleed system (20) and required by the air consumers (2) both at the beginning and at the end of the flight, that is, in principle when aircraft (10) is on-ground or close to it below a certain flight altitude.

Typical IP - HP air bleed system (20) is conventionally designed to extract air by default by the IP port during the majority of the flight, such as in take-off, climbing, cruise, and holding, while HP port mostly extracts air if IP port is not capable of providing enough air pressure to meet air consumer requirements.

Therefore, in those phases where HP port is extracting air to mostly supply air consumers (2), there is a significant energy loss as it can be seen by peaks (11.4) in the graph (11) (selected by dashed circles). Those peaks (11.4) represent a power mismatch which entails an energy loss.

This energy loss is because:
- on one hand, the energy delivered by the HP port during holding is significantly higher than the energy required by air consumers. HP port is mainly used under these conditions because the energy delivered by the IP port is lower than the energy required; and
- the energy delivered by the IP port during take-off and early climb phases is significantly higher than the energy required, since the IP port is selected to meet the requirements of the air consumers during cruise. Further, in cruise, the energy extracted from the IP port is lower than during take-off and climbing phases.

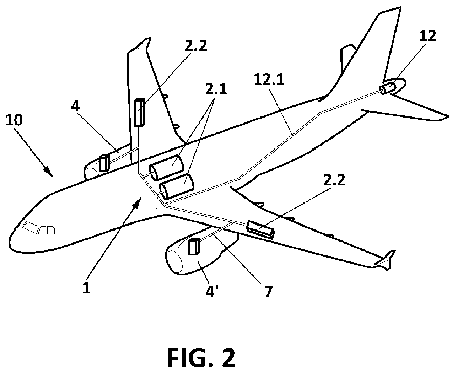

Figure 2 depicts a schematic representation of an aircraft (10) comprising an air management system (1) according to the present invention.

In particular, the aircraft (10) comprises two gas turbine engines (4, 4') hanging from each wing by respective pylons. For illustrative reasons, it is schematically represented as a single line both the low-pressure bleed duct (4) and the high-pressure bleed duct (5) coming from the low-pressure port (4.1) (IP port) located at a low-intermediate compressor stage of the gas turbine engine (4) and the high-pressure port (5.1) (HP port) located at a high-intermediate compressor stage, respectively. It is to be noted that the mixing chamber (6), and first (4.2) and second (5.2) shut-off valves, as well as other hydraulic equipment are not shown in this figure.

It is shown that bleed ports (IP and HP) are in fluid communication (by the outlet duct (7)) with WAIS (2.2) and Air Conditioning Packs (2.1) of the ECS in order to convey pressurized air thereto. In addition, the Air Conditioning Packs may be replaced by Vapor Cycle Machine Packs which need lower air pressure in comparison with conventional Air Conditioning Packs.

It is to be noted that, although only WAIS (2.2) and ECS (2.1) are represented as air consumers (5), other minor air consumers may be used such as: fuel tank inerting system, engine starting system, water and waste, and/or hydraulic reservoirs pressurization.

Furthermore, the aircraft (10) may comprise an Auxiliary Power Unit ('APU') (12) at the tailcone thereof. This APU (12) may be also in fluid communication (by APU bleed ducting (12.1)) with the WAIS (2.2) and Air Conditioning Packs (2.1) of the ECS in order to provide either pneumatic or electrical energy thereto.

Typical APU bleed ducting (12.1) for pneumatic mode is also associated with OverHeat Detection System ('OHDS') for safety reasons.

Also, a control unit (not shown throughout these figures) is electrically connected to at least the first shut-off valve (4.2) and the second shut-off valve (5.2) to selectively operate them based on an aircraft (10) operational condition. In addition, the control unit may be electrically connected further valves of the air management system (1), such as the variable nozzle, to allow the bleed air coming from any of the ports (4.1, 5.1) either to pass through, or being cut-off, or the flow rate being modulated.

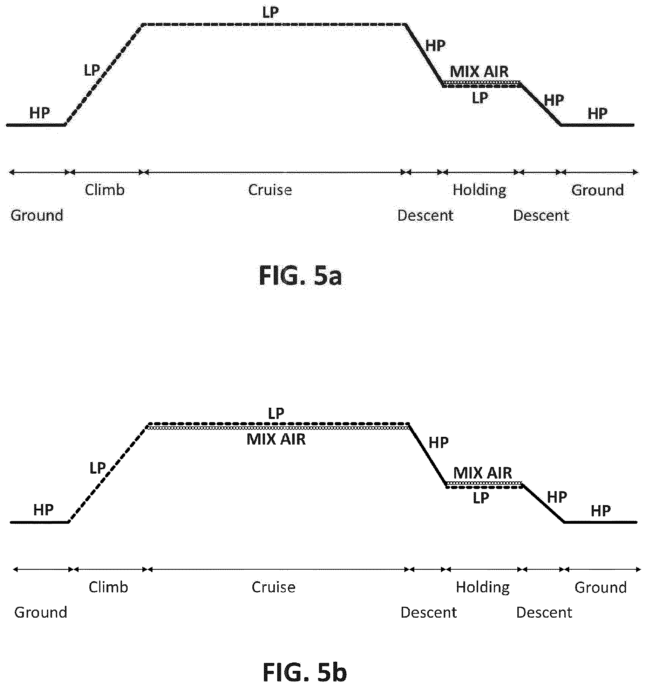

Particularly, such aircraft (10) operation condition may be a pre-determined flight altitude, for instance 15000 ft (4572 m), and/or any of the flight phases seen in Figures 5a and 5b.

Figure 3a depicts a schematic architecture of a conventional air management system (1).

It can be appreciated the two ports, IP (20.1) and HP (20.2), coming from the compressor stage of the gas turbine engine (4). Additionally, there is a third port (20.3) in fluid communication with the fan by a fan duct (23), specifically design to extract cooling air therefrom and direct it to a pre-cooler (20.4).

This pre-cooler (20.4) is designed to operate with the bleed air extracted from the two ports (IP and HP) at respective compressor stages. Therefore, since bleed air extracted from HP (20.2) has higher pressure and temperature, the pre-cooler (20.4) has bigger size to increase the cooling effect. Pre-coolers are normally integrated within the pylon.

Alternatively, cooling air may directly come from ram air instead from fan port (20 .3).

It can be seen also the valves, regulators, and other hydraulic components which forms the conventional air management system (1) of an aircraft (10). For instance, there is a overpressure valve ('OPV') (20.5), also named as relief valves, or High Pressure Valve ('HPV') (22.1) whose function is to maintain the pressurized air conveyed through HP ducting (22) at an admissible pressure and temperature.

Also, air extracted from the IP port (20.1) may be regulated via a Pressure Regulating Valve ('PRV'). Further, a valve referenced as 'IPCV' is interposed between IP port and the joining point where formerly IP ducting (21) and HP ducting (22) were abruptly brought together for preventing from reverse flow.

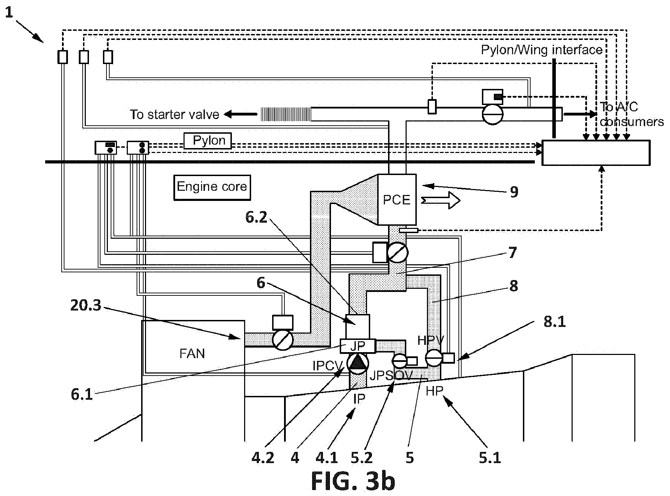

Figure 3b depicts a schematic architecture of an air management system (1) according to the present invention. As an example, it may form the pneumatic scheme of the air management system (1) shown in Figure 2.

In comparison with the conventional hydraulic scheme of Figure 3a, the pneumatic scheme of an air management system (1) according to the present invention is substantially similar in lay-out, but includes:
- a low-pressure bleed duct (4) configured for conveying air bled from the low-pressure port (4.1), wherein the low-pressure bleed duct (4) comprises a first shut-off valve (4.2) configured to stop or allow the flow of low-pressure air downstream;
- a high-pressure bleed duct (5) configured for conveying air bled from the high-pressure port (5.1), wherein the high-pressure bleed duct (5) comprises a second shut-off valve (5.2) configured to stop or allow the flow of high-pressure air downstream; and
- a mixing chamber (6) comprising an inlet port (6.1) and an outlet port (6.2), wherein the inlet port (6.1) is in fluid communication with both the low-pressure bleed duct (4) and the high-pressure bleed duct (5) forming a jet pump within the mixing chamber, and wherein the outlet port (6.2) is in fluid communication with the at least one air consumer (2) via an outlet duct (7).

In particular, at the inlet port (6.1) of the mixing chamber (6), the high-pressure bleed duct (5) comprises a fixed nozzle (not shown) for the high-pressure air toward said mixing chamber (6).

As it is fixed, the exit area is determined irrespective of the flight phase or altitude and, then, the formed jet pump only functions ideally at a single operating condition.

Therefore, for supplying high-pressure air exclusively, the air management system (1) further comprises a branch duct (8) in fluid communication with the high-pressure bleed duct (5) - upstream the second shut-off valve (5.2) - and the outlet duct (7), in order to divert such air in high-energy demanding situations.

This branch duct (8) is quite similar to the conventional HP ducting (22) (see figure 3a) and, therefore, comprises fail-safe equipment such as a high pressure valve (8.1) configured to maintain the high-pressure air conveyed within predetermined pressure and temperature levels.

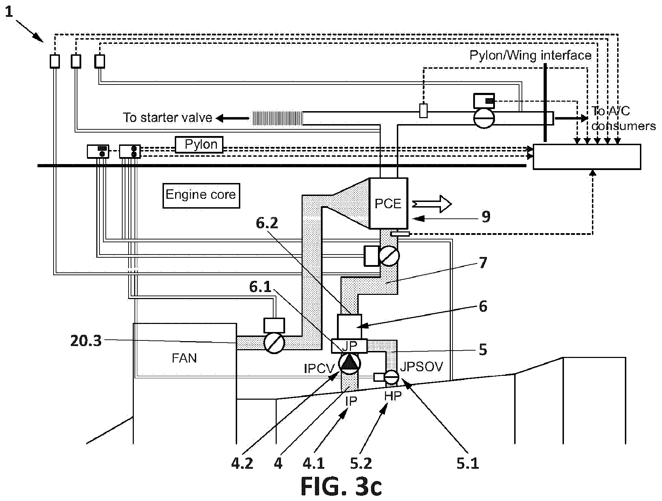

Figure 3c depicts a yet another embodiment of the air management system (1) according to the present invention wherein, at the inlet port (6.1) of the mixing chamber (6), the high-pressure bleed duct (5) comprises a variable nozzle (not shown) whose position determines the exit area for the high-pressure air toward said mixing chamber (6), and wherein the control unit is further configured to control the exit area of the variable nozzle based on the received input.

Therefore, the amount of high-pressure air injected through the variable nozzle can be regulated as needed thus optimizing the jet pump function, i.e. the Venturi effect, for the particular operating condition.

Compared with figure 3b, it can be seen that thanks to the variability of the nozzle allowing to let as much high-pressure air to pass as conventionally, there is no need for the branch duct (8). Thus, in this embodiment, either if the consumers (2) are supplied exclusively with low-pressure air, exclusively with high-pressure air, or both at the same time, said air will always pass through the mixing chamber.

Further, former Over-Pressure Valve (20.5) is no longer needed as maximum air pressure remains at admissible levels, for instance below 90 psig (0,62053 MPa).

Additionally, as it can be seen in Figure 3c there is a third port (20.3) in fluid communication with the fan, specifically designed to extract cooling air therefrom and direct it to a pre-cooler (9).

Since air reaching the pre-cooler (9) from the hot side (that is, from the outlet duct (7)) is not as hot as conventionally, the pre-cooler is specifically designed and sized to operate with the air coming from the mixing chamber (). In addition, IP port pressure can be boosted up to avoid switching to HP port giving rise to a pre-cooler size reduction of about 50%.

Once the compressed air coming from the mixing chamber (6) has been cooled down in the pre-cooler (9), it is directed to the air consumers (2) as the arrow points out.

It is to be noted that the present air management system (1) may regulate conveyed air at less temperature than nowadays temperature regulation which is about 200°C.

Further, IP port (4.1) location may be advantageously reduced by 1-3 stages because, inter alia, the low pressure requirement of Vapor Cycle Machine Packs above 15000 ft (4572 m), although not shown herein for illustrative purposes.

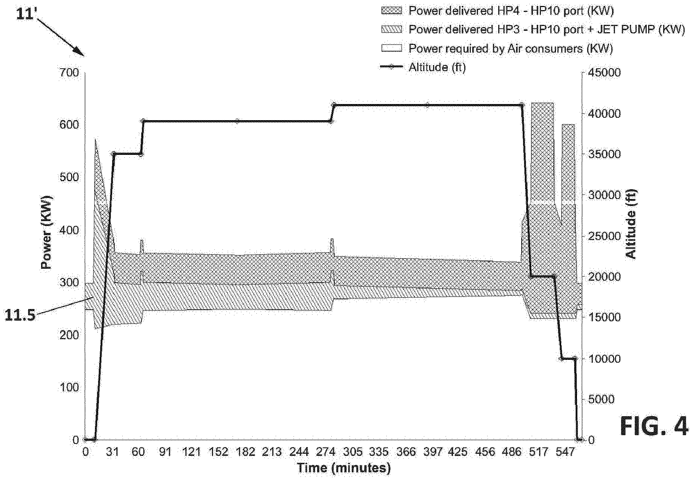

Figure 4 depicts a schematic graph (11') of the power delivering of the air management system of figure 3c in comparison with power required by air consumers (2).

To better compare the benefits in terms of power saving of the air management system according to figure 3c, the schematic graph (11) of former figure 1 is reproduced again. Superimposed to this, it is depicted the power delivered in kW by the air management system (1) according to the invention.

As it can be observed, this power delivered (11.5) better suits the power required (11.2) by the air consumers in kW. More particularly, there is an enormous benefit in the holding flight phase because, in this phase, the energy delivered by the IP port is assisted and fine-tuned by the HP port in the mixing chamber with the variable nozzle avoiding any waste of energy and impacting in fuel saving.

The present invention further provides a method for supplying pressurized air to the air consumer (2) equipment. The steps of said method comprise:
- providing an air management system (1) as described hereinabove;
- receiving by the control unit (not shown) an input relative to the aircraft (10) operation condition; and
- operating the at least the first shut-off valve (4.2) and/or the second shut-off valve (5.2) based on the received input.

Figure 5a depicts an exemplary aircraft (10) mission profile using an air management system (1) according to the present invention throughout the flight phases in nominal case.

If the at least one air consumer (2) is supplied with low-pressure air, it is represented in dotted line. Else if, when the at least one air consumer (2) is supplied with high-pressure air, it is represented in continuous line. Finally, if the at least one air consumer (2) is supplied with mixed air, it is represented in dashed line.

In particular, the criteria follow by the control unit to operate the first shut-off valve and/or the second shut-off valve upon receiving an aircraft (10) operation condition (i.e. flight altitude or flight phase) is summarized as follows:
- Below a pre-determined altitude, preferably 15000 ft (4572 m):
   ∘ in taxiing, the at least one air consumer (2) is supplied with high-pressure air;
   ∘ in taking-off, the at least one air consumer (2) is supplied with high-pressure air;
   ∘ in climbing, the at least one air consumer (2) is supplied with high-pressure air up to the pre-determined altitude;
- Above the pre-determined altitude:
   ∘ still in climbing, the at least one air consumer (2) is supplied with low-pressure air;
   ∘ in cruise, the at least one air consumer (2) is supplied with low-pressure air; and
- Once cruise phase ends:
   ∘ in descending and landing, the at least one air consumer (2) is supplied with high-pressure air; and
   ∘ in holding, either:
      ▪ the at least one air consumer (2) is supplied with mixed air, or
      ▪ the at least one air consumer (2) is supplied with low-pressure air.

Depending on, inter alia, the required consumer air pressure during holding the control unit may operate the first (4.2) and/or second (5.2) shut-off valves so as to supply exclusively low-pressure air or, in addition, high-pressure air to meet peak demands.

In other words, as the aircraft (10) passes from one phase to another, the control unit receives the corresponding input and operates the corresponding shut-off valves and, optionally, the variable nozzle.

As it was already mentioned, since air management system (1) operates in favorable conditions from energy cost point of view (high altitude and relative high speed), the air management system (1) architecture is sized according to cruise phase flight conditions, which encompasses the majority of the flight.

Energy-demanding flight phases such as *on-ground* operation, take-off, or even the first portion of climbing, as well as other phases like descent (or approaching) relies exclusively in pressurized air supplied by the HP port.

Therefore, the variable nozzle adapts the delivered HP pressure air to the required pressure by the air consumer (2) upon indication from the control unit.

Further, figure 5b depicts exemplary aircraft (10) mission profile using an air management system (1) according to the present invention throughout the flight phases in a failure scenario.

In comparison with figure 5a, in cruise, the control unit is further configured to open both the first shut-off valve (4.2) and the second shut-off valve (5.2) allowing the flow of mixed air toward at least one air consumer.

In other words, in a corner or failure situation, the control unit may open both shut-off valves in cruise in order the HP port assist the IP port for supplying the consumers depending, inter alia, on the air consumers pressure required during this phase.

Throughout the entire description, the person skilled in the art would recognize that specific figures of aircraft (10) operation, or parameters of air bleed systems highly depend on specifics of the aircraft (10) model.

## Claims

1. An air management system (1) for supplying pressurized air to an air consumer (2) equipment of an aircraft (10), the air management system (1) comprising:
- the at least one air consumer (2);
- a gas turbine engine (3) having a low-pressure port (4.1) located at a low-intermediate compressor stage of the gas turbine engine (3) and a high-pressure port (5.1) located at a high-intermediate compressor stage of the gas turbine engine (3);
- a low-pressure bleed duct (4) configured for conveying air bled from the low-pressure port (4.1), wherein the low-pressure bleed duct (4) comprises a first shut-off valve (4.2) configured to stop or allow the flow of low-pressure air downstream;
- a high-pressure bleed duct (5) configured for conveying air bled from the high-pressure port (5.1), wherein the high-pressure bleed duct (5) comprises a second shut-off valve (5.2) configured to stop or allow the flow of high-pressure air downstream;
- a mixing chamber (6) comprising an inlet port (6.1) and an outlet port (6.2), wherein the inlet port (6.1) is in fluid communication with the low-pressure bleed duct (4) and with the high-pressure bleed duct (5) forming a jet pump, and wherein the outlet port (6.2) is in fluid communication with the at least one air consumer (2) via an outlet duct (7),
- a control unit configured to receive an input relative to the aircraft (10) operation condition and selectively operate at least the first shut-off valve (4.2) and/or the second shut-off valve (5.2) based on the received input;
**characterized in that**
the aircraft (10) operation condition is a pre-determined flight altitude and/or the flight phase among the following: taxiing, take-off, climb, cruise, descent, holding, and landing, and the control unit is configured to selectively operate at least the first shut-off valve (4.2) and/or the second shut-off valve (5.2) according to the received input, so that:
- in taxiing, the first shut-off valve (4.2) is closed while the second shut-off valve (5.2) is opened allowing the flow of high-pressure air toward at least one air consumer (2);
- in taking-off, the first shut-off valve (4.2) is closed while the second shut-off valve (5.2) is opened allowing the flow of high-pressure toward at least one air consumer (2);
- in climbing, the first shut-off valve (4.2) is closed while the second shut-off valve (5.2) is opened up to a pre-determined flight altitude, being the pre-determined altitude preferably 15000 ft (4572 m); then, the first shut-off valve (4.2) is switched to open while the second shut-off valve (5.2) is switched to close allowing the flow of low-pressure air toward at least one air consumer (2);
- in cruise, the first shut-off valve (4.2) is opened while the second shut-off valve (5.2) is closed allowing the flow of low-pressure air toward at least one air consumer (2);
- in descending and landing, the first shut-off valve (4.2) is closed while the second shut-off valve (5.2) is opened allowing the flow of high-pressure air toward at least one air consumer (2); and
- in holding, either:
∘ the first shut-off valve (4.2) and the second shut-off valve (5.2) are opened allowing the flow of mixed air toward at least one air consumer (2), or
∘ the first shut-off valve (4.2) is opened while the second shut-off valve (5.2) is closed allowing the flow of low-pressure air toward at least one air consumer (2).

2. An air management system (1) according to claim 1, wherein, at the inlet port (6.1) of the mixing chamber (6), the high-pressure bleed duct (5) comprises a variable nozzle whose position determines the exit area for the high-pressure air toward said mixing chamber (6), and wherein the control unit is further configured to control the exit area of the variable nozzle based on the received input.

3. Air management system (1) according to claim 1 or 2, wherein the at least one air consumer (2) is at least one of the following:
- environmental control system (2.1);
- fuel tank inerting system;
- wing anti-ice system (2.2);
- engine starting system;
- water and waste; and/or
- hydraulic reservoirs pressurization.

4. Air management system (1) according to claim 3, wherein the environmental control system (2.1) comprises a vapor cycle machine in fluid communication with the outlet duct (7).

5. Air management system (1) according to any of claims 1 to 4, further comprising a pre-cooler (9) in thermal communication with the outlet duct (7) and a cooling air source.

6. Air management system (1) according to claims 2 and 5, wherein the pre-cooler (9) is dimensioned to operate with the air coming from the mixing chamber (6).

7. Air management system (1) according to claim 2, wherein the variable nozzle of the high-pressure bleed duct (5) is configured to control the exit area for adapting the supply of high-pressure air according to the flight phase and/or altitude.

8. Method for supplying pressurized air to air consumer (2), the method comprising:
- providing an air management system (1) according to any of claims 1 to 7;
- receiving by the control unit an input relative to the aircraft (10) operation condition; and
- operating the at least the first shut-off valve (4.2) and/or the second shut-off valve (5.2) based on the received input;
**characterized in that**
the method further comprising:
operating by the control unit the at least the first shut-off valve (4.2) and/or the second shut-off valve (5.2) depending on the received input, so that:
- in taxiing, the first shut-off valve (4.2) is closed and the second shut-off valve (5.2) is opened and the at least one air consumer (2) is supplied with high-pressure air;
- in taking-off, the first shut-off valve (4.2) is closed and the second shut-off valve (5.2) is opened and the at least one air consumer (2) is supplied with high-pressure air;
- in climbing, the first shut-off valve (4.2) is closed and the second shut-off valve (5.2) is opened up to a pre-determined flight altitude and the at least one air consumer (2) is supplied with high-pressure air up to the pre-determined altitude, being the pre-determined altitude preferably 15000 ft; then, the first shut-off valve (4.2) is switched to open while the second shut-off valve (5.2) is switched to close and the at least one air consumer (2) is supplied with low-pressure air;
- in cruise, the first shut-off valve (4.2) is opened and the second shut-off valve (5.2) is closed and the at least one air consumer (2) is supplied with low-pressure air;
- in descending, and landing, the first shut-off valve (4.2) is closed and the second shut-off valve (5.2) is opened and the at least one air consumer (2) is supplied with high-pressure air;
- in holding, either:
∘ the first shut-off valve (4.2) and the second shut-off valve (5.2) are opened and the at least one air consumer (2) is supplied with mixed air, or
∘ the first shut-off valve (4.2) is opened and the second shut-off valve (5.2) is closed and the at least one air consumer (2) is supplied with low-pressure air.

9. Aircraft (10) comprising an air management system (1) according to any of claims 1 to 7.

## Patentansprüche

1. Luftversorgungssystem (1) zum Versorgen einer Luftverbraucheranlage (2) eines Flugzeugs (10) mit Druckluft, wobei das Luftversorgungssystem (1) umfasst:
- den mindestens einen Luftverbraucher (2);
- ein Gasturbinentriebwerk (3) mit einem Niederdruckanschluss (4.1), der an einer niedrig-mittleren Verdichterstufe des Gasturbinentriebwerks (3) angeordnet ist, und einem Hochdruckanschluss (5.1), der an einer hochmittleren Verdichterstufe des Gasturbinentriebwerks (3) angeordnet ist;
- eine Niederdruck-Zapfluftleitung (4), die dazu ausgelegt ist, vom Niederdruckanschluss (4.1) entnommene Zapfluft zu fördern, wobei die Niederdruck-Zapfluftleitung (4) ein erstes Absperrventil (4.2) umfasst, das dazu ausgelegt ist, den stromabwärtigen Fluss von Niederdruckluft zu stoppen oder zuzulassen;
- eine Hochdruck-Zapfluftleitung (5), die dazu ausgelegt ist, vom Hochdruckanschluss (5.1) entnommene Zapfluft zu fördern, wobei die Hochdruck-Zapfluftleitung (5) ein zweites Absperrventil (5.2) umfasst, das dazu ausgelegt ist, den stromabwärtigen Fluss von Hochdruckluft zu stoppen oder zuzulassen;
- eine Mischkammer (6), die einen Einlassanschluss (6.1) und einen Auslassanschluss (6.2) umfasst, wobei der Einlassanschluss (6.1) mit der Niederdruck-Zapfluftleitung (4) und mit der Hochdruck-Zapfluftleitung (5) in Fluidverbindung steht und eine Strahlpumpe bildet, und wobei der Auslassanschluss (6.2) über eine Auslassleitung (7) mit dem mindestens einen Luftverbraucher (2) in Fluidverbindung steht;
- eine Steuereinheit, die dazu ausgelegt ist, eine Eingabe in Bezug auf den Betriebszustand des Flugzeugs (10) zu empfangen und selektiv mindestens das erste Absperrventil (4.2) und/oder das zweite Absperrventil (5.2) basierend auf der empfangenen Eingabe zu betätigen;
**dadurch gekennzeichnet, dass**
der Betriebszustand des Flugzeugs (10) eine vorbestimmte Flughöhe und/oder eine der folgenden Flugphasen ist: Rollen, Start, Steigflug, Reiseflug, Sinkflug, Warteflug und Landung, und die Steuereinheit dazu ausgelegt ist, mindestens das erste Absperrventil (4.2) und/oder das zweite Absperrventil (5.2) selektiv gemäß der empfangenen Eingabe zu betätigen, sodass:
- beim Rollen das erste Absperrventil (4.2) geschlossen ist, während das zweite Absperrventil (5.2) geöffnet ist, wodurch der Fluss von Hochdruckluft zu mindestens einem Luftverbraucher (2) zugelassen wird;
- beim Start das erste Absperrventil (4.2) geschlossen ist, während das zweite Absperrventil (5.2) geöffnet ist, wodurch der Fluss von Hochdruck zu mindestens einem Luftverbraucher (2) zugelassen wird;
- im Steigflug das erste Absperrventil (4.2) bis zu einer vorbestimmten Flughöhe geschlossen ist, während das zweite Absperrventil (5.2) geöffnet ist, wobei die vorbestimmte Flughöhe vorzugsweise 15000 ft (4572 m) beträgt; danach wird das erste Absperrventil (4.2) auf geöffnet geschaltet, während das zweite Absperrventil (5.2) auf geschlossen geschaltet wird, wodurch der Fluss von Niederdruckluft zu mindestens einem Luftverbraucher (2) zugelassen wird;
- im Reiseflug das erste Absperrventil (4.2) geöffnet ist, während das zweite Absperrventil (5.2) geschlossen ist, wodurch der Fluss von Niederdruckluft zu mindestens einem Luftverbraucher (2) zugelassen wird;
- im Sinkflug und bei der Landung das erste Absperrventil (4.2) geschlossen ist, während das zweite Absperrventil (5.2) geöffnet ist, wodurch der Fluss von Hochdruckluft zu mindestens einem Luftverbraucher (2) zugelassen wird; und
- in der Warteschleife entweder:
∘ das erste Absperrventil (4.2) und das zweite Absperrventil (5.2) geöffnet sind, wodurch der Fluss von gemischter Luft zu mindestens einem Luftverbraucher (2) zugelassen wird, oder
∘ das erste Absperrventil (4.2) geöffnet ist, während das zweite Absperrventil (5.2) geschlossen ist, wodurch der Fluss von Niederdruckluft zu mindestens einem Luftverbraucher (2) zugelassen wird.

2. Luftversorgungssystem (1) nach Anspruch 1, wobei am Einlassanschluss (6.1) der Mischkammer (6) die Hochdruck-Zapfluftleitung (5) eine verstellbare Düse umfasst, deren Stellung die Austrittsfläche für die Hochdruckluft in Richtung der Mischkammer (6) bestimmt, und wobei die Steuereinheit ferner dazu ausgelegt ist, die Austrittsfläche der verstellbaren Düse basierend auf der empfangenen Eingabe zu steuern.

3. Luftversorgungssystem (1) nach Anspruch 1 oder 2, wobei der mindestens eine Luftverbraucher (2) mindestens eines der folgenden ist:
- Umgebungssteuerungssystem (2.1);
- Inertisierungssystem der Kraftstofftanks;
- Vereisungsschutzsystem (2.2);
- Triebwerksstartsystem;
- Wasser und Abfall und/oder
- Druckbeaufschlagung der Hydraulikbehälter.

4. Luftversorgungssystem (1) nach Anspruch 3, wobei das Umgebungssteuerungssystem (2.1) eine Dampfzyklusmaschine umfasst, die in Fluidverbindung mit der Auslassleitung (7) steht.

5. Luftversorgungssystem (1) nach einem der Ansprüche 1 bis 4, ferner umfassend einen Vorkühler (9), der mit der Auslassleitung (7) und einer Kühlluftquelle in thermischer Verbindung steht.

6. Luftversorgungssystem (1) nach den Ansprüche 2 und 5, wobei der Vorkühler (9) so dimensioniert ist, dass er mit der Luft arbeitet, die aus der Mischkammer (6) abgezogen wird.

7. Luftversorgungssystem (1) nach Anspruch 2, wobei die verstellbare Düse der Hochdruck-Zapfluftleitung (5) dazu ausgelegt ist, die Austrittsfläche zur Anpassung der Zufuhr von Hochdruckluft gemäß der Flugphase und/oder der Flughöhe zu steuern.

8. Verfahren zur Versorgung des Luftverbrauchers mit Druckluft (2), wobei das Verfahren umfasst:
- Bereitstellen eines Luftversorgungssystems (1) nach einem der Ansprüche 1 bis 7,
- Empfangen einer Eingabe in Bezug auf den Betriebszustand des Flugzeugs (10) durch die Steuereinheit; und
- Betätigen mindestens des ersten Absperrventils (4.2) und/oder des zweiten Absperrventils (5.2) basierend auf der empfangenen Eingabe;
**dadurch gekennzeichnet, dass**
das Verfahren ferner umfasst:
Betätigen, durch die Steuereinheit, mindestens des ersten Absperrventils (4.2) und/oder des zweiten Absperrventils (5.2) in Abhängigkeit von der empfangenen Eingabe, sodass:
- beim Rollen das erste Absperrventil (4.2) geschlossen ist, das zweite Absperrventil (5.2) geöffnet ist und der mindestens eine Luftverbraucher (2) mit Hochdruckluft versorgt wird;
- beim Start das erste Absperrventil (4.2) geschlossen ist, das zweite Absperrventil (5.2) geöffnet ist und der mindestens eine Luftverbraucher (2) mit Hochdruckluft versorgt wird;
- im Steigflug bis zu einer vorbestimmten Flughöhe das erste Absperrventil (4.2) geschlossen ist und das zweite Absperrventil (5.2) geöffnet ist und der mindestens eine Luftverbraucher (2) mit Hochdruckluft versorgt wird, wobei die vorbestimmte Flughöhe vorzugsweise 15000 ft beträgt; danach wird das erste Absperrventil (4.2) geöffnet, während das zweite Absperrventil (5.2) geschlossen wird und der mindestens eine Luftverbraucher (2) wird mit Niederdruckluft versorgt;
- im Reiseflug das erste Absperrventil (4.2) geöffnet ist, das zweite Absperrventil (5.2) geschlossen ist und der mindestens eine Luftverbraucher (2) mit Niederdruckluft versorgt wird;
- im Sinkflug und bei der Landung das erste Absperrventil (4.2) geschlossen ist und das zweite Absperrventil (5.2) geöffnet ist und der mindestens eine Luftverbraucher (2) mit Hochdruckluft versorgt wird;
- in der Warteschleife entweder:
∘ das erste Absperrventil (4.2) und das zweite Absperrventil (5.2) geöffnet sind und der mindestens eine Luftverbraucher (2) mit gemischter Luft versorgt wird, oder
∘ das erste Absperrventil (4.2) geöffnet ist und das zweite Absperrventil (5.2) geschlossen ist und der mindestens eine Luftverbraucher (2) mit Niederdruckluft versorgt wird.

9. Flugzeug (10), umfassend ein Luftversorgungssystem (1) nach einem der Ansprüche 1 bis 7.

## Revendications

1. Système de gestion de l'air (1) pour alimenter en air sous pression au moins un équipement consommateur d'air (2) d'un aéronef (10), le système de gestion de l'air (1) comprenant :
- l'au moins un consommateur d'air (2) ;
- un moteur à turbine à gaz (3) ayant un orifice basse pression (4.1) situé au niveau d'un étage de compresseur intermédiaire bas du moteur à turbine à gaz (3) et un orifice haute pression (5.1) situé au niveau d'un étage de compresseur intermédiaire haut du moteur à turbine à gaz (3) ;
- un conduit de purge basse pression (4) conçu pour transporter l'air purgé de l'orifice basse pression (4.1), le conduit de purge basse pression (4) comprenant une première vanne d'arrêt (4.2) conçue pour arrêter ou permettre l'écoulement de l'air basse pression en aval ;
- un conduit de purge haute pression (5) conçu pour transporter l'air purgé de l'orifice haute pression (5.1), le conduit de purge haute pression (5) comprenant une seconde vanne d'arrêt (5.2) conçue pour arrêter ou permettre l'écoulement de l'air haute pression en aval ;
- une chambre de mélange (6) comprenant un orifice d'entrée (6.1) et un orifice de sortie (6.2), l'orifice d'entrée (6.1) étant en communication fluidique avec le conduit de purge basse pression (4) et avec le conduit de purge haute pression (5) et formant une pompe à jet, et l'orifice de sortie (6.2) étant en communication fluidique avec au moins un consommateur d'air (2) par l'intermédiaire d'un conduit de sortie (7),
- une unité de commande conçue pour recevoir une entrée relative à la condition de fonctionnement de l'aéronef (10) et faire fonctionner sélectivement au moins la première vanne d'arrêt (4.2) et/ou la seconde vanne d'arrêt (5.2) sur la base de l'entrée reçue ;
**caractérisé en ce que**
la condition de fonctionnement de l'aéronef (10) est une altitude de vol prédéterminée et/ou la phase de vol parmi les suivantes : circulation au sol, décollage, montée, croisière, descente, attente, et atterrissage, et l'unité de commande est conçue pour faire fonctionner sélectivement au moins la première vanne d'arrêt (4.2) et/ou la seconde vanne d'arrêt (5.2) selon l'entrée reçue, de sorte que :
- en circulation au sol, la première vanne d'arrêt (4.2) est fermée tandis que la seconde vanne d'arrêt (5.2) est ouverte pour permettre l'écoulement de l'air haute pression vers au moins un consommateur d'air (2) ;
- au décollage, la première vanne d'arrêt (4.2) est fermée tandis que la seconde vanne d'arrêt (5.2) est ouverte, permettant l'écoulement de la haute pression vers au moins un consommateur d'air (2) ;
- en montée, la première vanne d'arrêt (4.2) est fermée tandis que la seconde vanne d'arrêt (5.2) est ouverte jusqu'à une altitude de vol prédéterminée, l'altitude prédéterminée étant préférablement de 15 000 pieds (4 572 m) ; ensuite, la première vanne d'arrêt (4.2) est commutée en position d'ouverture tandis que la seconde vanne d'arrêt (5.2) est commutée en position de fermeture, permettant l'écoulement d'air basse pression vers au moins un consommateur d'air (2) ;
- en croisière, la première vanne d'arrêt (4.2) est ouverte tandis que la seconde vanne d'arrêt (5.2) est fermée, permettant l'écoulement d'air basse pression vers au moins un consommateur d'air (2) ;
- en descente et à l'atterrissage, la première vanne d'arrêt (4.2) est fermée tandis que la seconde vanne d'arrêt (5.2) est ouverte, permettant l'écoulement d'air haute pression vers au moins un consommateur d'air (2) ; et
- en attente, soit :
∘ la première vanne d'arrêt (4.2) et la seconde vanne d'arrêt (5.2) sont ouvertes, permettant l'écoulement d'air mélangé vers au moins un consommateur d'air (2), soit
∘ la première vanne d'arrêt (4.2) est ouverte tandis que la seconde vanne d'arrêt (5.2) est fermée, permettant l'écoulement d'air basse pression vers au moins un consommateur d'air (2).

2. Système de gestion de l'air (1) selon la revendication 1, au niveau de l'orifice d'entrée (6.1) de la chambre de mélange (6), le conduit de purge haute pression (5) comprenant une buse variable dont la position détermine la zone de sortie pour l'air haute pression vers ladite chambre de mélange (6), et l'unité de commande étant en outre conçue pour commander la zone de sortie de la buse variable sur la base de l'entrée reçue.

3. Système de gestion de l'air (1) selon la revendication 1 ou 2, l'au moins un consommateur d'air (2) étant au moins l'un des éléments suivants :
- système de commande environnemental (2.1) ;
- système d'inertage de réservoir de carburant ;
- système antigivrage ailes (2.2) ;
- système de démarrage du moteur ;
- eau et déchets ; et/ou
- pressurisation de réservoirs hydrauliques.

4. Système de gestion de l'air (1) selon la revendication 3, le système de commande environnemental (2.1) comprenant une machine à cycle de vapeur en communication fluidique avec le conduit de sortie (7).

5. Système de gestion de l'air (1) selon l'une quelconque des revendications 1 à 4, comprenant en outre un pré-refroidisseur (9) en communication thermique avec le conduit de sortie (7) et une source d'air de refroidissement.

6. Système de gestion de l'air (1) selon les revendications 2 et 5, le pré-refroidisseur (9) étant dimensionné pour fonctionner avec l'air provenant de la chambre de mélange (6).

7. Système de gestion de l'air (1) selon la revendication 2, la buse variable du conduit de purge haute pression (5) étant conçue pour commander la zone de sortie pour adapter l'alimentation en air haute pression en fonction de la phase de vol et/ou de l'altitude.

8. Procédé pour alimenter en air sous pression un consommateur d'air (2), le procédé comprenant :
- la fourniture d'un système de gestion de l'air (1) selon l'une quelconque des revendications 1 à 7 ;
- la réception par l'unité de commande, d'une entrée relative à la condition de fonctionnement de l'aéronef (10) ; et
- le fait de faire fonctionner la première vanne d'arrêt (4.2) et/ou la seconde vanne d'arrêt (5.2) sur la base de l'entrée reçue ;
**caractérisé en ce que**
le procédé comprend en outre :
le fait de faire fonctionner, par l'unité de commande, au moins la première vanne d'arrêt (4.2) et/ou la seconde vanne d'arrêt (5.2) sur la base de l'entrée reçue, de sorte que :
- en circulation au sol, la première vanne d'arrêt (4.2) est fermée et la seconde vanne d'arrêt (5.2) est ouverte et le consommateur d'air (2) est alimenté en air haute pression ;
- au décollage, la première vanne d'arrêt (4.2) est fermée et la seconde vanne d'arrêt (5.2) est ouverte et le consommateur d'air (2) est alimenté en air haute pression ;
- en montée, la première vanne d'arrêt (4.2) est fermée et la seconde vanne d'arrêt (5.2) est ouverte jusqu'à une altitude de vol prédéterminée et le consommateur d'air (2) est alimenté en air haute pression jusqu'à l'altitude prédéterminée, l'altitude prédéterminée étant préférablement de 15 000 pieds ; ensuite, la première vanne d'arrêt (4.2) est commutée en position d'ouverture tandis que la seconde vanne d'arrêt (5.2) est commutée en position de fermeture et le consommateur d'air (2) est alimenté en air basse pression ;
- en croisière, la première vanne d'arrêt (4.2) est ouverte et la seconde vanne d'arrêt (5.2) est fermée et le consommateur d'air (2) est alimenté en air basse pression ;
- en descente et à l'atterrissage, la première vanne d'arrêt (4.2) est fermée et la seconde vanne d'arrêt (5.2) est ouverte et le consommateur d'air (2) est alimenté en air haute pression ;
- en attente, soit :
∘ la première vanne d'arrêt (4.2) et la seconde vanne d'arrêt (5.2) sont ouvertes et l'au moins un consommateur d'air (2) est alimenté en air mélangé, soit
∘ la première vanne d'arrêt (4.2) est ouverte et la seconde vanne d'arrêt (5.2) est fermée et l'au moins un consommateur d'air (2) est alimenté en air basse pression.

9. Aéronef (10) comprenant un système de gestion de l'air (1) selon l'une quelconque des revendications 1 à 7.
